# EUROPEAN PATENT APPLICATION

(11) **EP 2 434 151 A2**
(43) Date of publication of application: **28.03.2012**
(21) Application number: 11182053.6
(22) Date of filing: 20.09.2011
(51) Int. Cl.: F03D 11/00

(54) **Wind power generator**

(30) Priority: 28.09.2010 JP 2010217001
(71) Applicant: Fuji Jukogyo Kabushiki Kaisha, Tokyo 160-8316 (JP)
(72) Inventor: Yoshida, Shigeo, Tokyo 160-8316 (JP)
(74) Representative: Sajda, Wolf E.

(57) **Abstract**

This wind power generator is a wind power generator (1) that comprises a rotor (10) that is driven by wind power, a generator (20) that is rotated and driven by the rotor, a transformer (30) that raises the output voltage from the generator (20), and a nacelle (40) that is located at the top section of a tower (50) and houses the generator (20) and the transformer (30); wherein the nacelle (40) of this wind power generator (1) has an air intake (42) that draws in outside air for cooling the transformer (30), and an air outlet (43) that discharges the air that was drawn in from the air inlet (42) and used for cooling the transformer (30) to the outside, and the generator (20) is located outside of the airflow path from the air inlet (42) to the air outlet (43),

## Description

### FIELD OF THE INVENTION

The present invention relates to a wind power generator that is located inside a nacelle at the top of a wind turbine tower and that houses a rotor driven generator and a transformer, and more particularly to a wind power generator, the transformer of which can be cooled well by a simple construction.

### BACKGROUND OF THE INVENTION

Typically, a wind power generator generates electrical power by a rotor (wind turbine) driving a generator that is housed inside a nacelle that is located at the top of a wind turbine tower. The voltage of the power that the generator generates is raised by a transformer and transmitted as electric power.

Generally, the transformer is often housed in a building that is built on the ground adjacent to the wind turbine tower.

However, when a wind turbine is located in an area having limited installation space such as on the side of a mountain or hill or above the ocean, it is difficult to maintain installation space inside a building for housing the transformer.

In order to solve such a problem, technology for installing the transformer inside the tower or inside the nacelle has been proposed.

For example, Japanese Laid-open Patent Application Publication JP-A-2006-009 596 discloses a wind power generator wherein the transformer is housed on the inside of the tower base at the base of the wind turbine tower.

Moreover, Japanese Laid-open Patent Application Publication JP-A-2006-515 400 discloses wind turbine power generation equipment that is housed inside a container in which a power module that includes the transformer is installed.

Furthermore, FIG. 4 of Japanese Laid-open Patent Application Publication JP-A-2004-218 436 discloses a wind power generator of which the transformer is housed inside the nacelle.

By housing the transformer inside the nacelle as disclosed in Japanese Laid-open Patent Application Publication JP-A-2004-218 436, it is possible to reduce the installation space of the wind turbine tower. However, in this case, adequately cooling the various equipment inside the nacelle becomes very important.

As technology related to cooling the inside of the nacelle, Japanese Laid-open Patent Application Publication JP-A-S58-065 977 discloses a cooling mechanism for a wind power generator that suppresses an increase in temperature inside the nacelle by taking in air from an air intake, and forcibly circulating the air that was taken in by a fan that is housed inside the nacelle.

However, when the entire inside of the nacelle is air cooled as disclosed in Japanese Laid-open Patent Application Publication JP-A-S58-065 977, rain, snow dust, and in the case of a wind turbine above the ocean, salt, that enters in from the air intake together with the outside air causes the parts and wiring surrounding the generator to become dirty, corroded, rusty or the like.

On the other hand, when the entire inside of the nacelle is cooled using a radiator, it is possible to protect the parts surrounding the generator from foreign matter or from salt damage. However, in that case, the construction inside the nacelle becomes complex as well as the weight increases, so from a maintenance and performance aspect is not desirable.

### SUMMARY OF THE INVENTION

The object of the present invention is to provide a wind turbine generator having simple construction, and that is capable of sufficiently cooling the transformer that is housed inside the nacelle.

The present invention solves the problems described by the following means.

According to a first embodiment of the present invention for achieving the purpose described above, there is provided
a wind power generator, comprising:
a main power generator unit having a space on the inside thereof;
a wind turbine that is supported by the main power generator unit such that the wind turbine rotates freely;
a generator that is provided on the inside of the wind turbine, and that generates power by being driven by the rotation of the wind turbine; and
a transformer that is provided on the inside of the wind turbine and is connected to the generator, and transforms the power that is generated by the generator;
wherein
the main power generator unit has an air intake for introducing air into the space, and an air outlet that discharges the air that passed through the space to the outside; and
at least part of the transformer is exposed in the space, and the generator is not exposed in the space.

According to a further development of the present invention for achieving the purpose above, there is provided
a wind power generator further comprising:
a tower that is erected on a base section and that supports the main power generator unit so that rotation is possible in the horizontal direction;
wherein
the main power generator unit rotates in the horizontal direction according to the wind direction;
another space that is separated from the space by a partition is provided inside the main power generator unit, and that other space is arranged further on a downwind side than the space; and
the generator is located inside the other space.

According to a further development of the present invention for achieving the purpose described above, there is provided
a wind power generator further comprising:
a tower that is erected on a base section, and that supports the main power generator unit so that rotating is possible in the horizontal direction;
wherein
the main power generator unit rotates in the horizontal direction according to the wind direction;
the wind turbine is located on a downwind side with respect to the main power generator unit; and
the air intake is located on the end section on a upwind side of the main power generator unit.
According to a further development of the present invention for achieving the purpose described above, there is provided
a wind power generator further comprising:
a cooling unit that cools the generator by circulating cooling liquid inside the generator.

As explained above, with the present invention it is possible to provide a wind turbine generator having simple construction and that is capable of sufficiently cooling the transformer that is housed inside the nacelle.

Other features and advantages of the present invention will become apparent from the following detailed description, taken in conjunction with the accompanying drawings, which illustrate, by way of example, the principles of the invention.

### BRIEF DESCRIPTION OF THE DRAWINGS

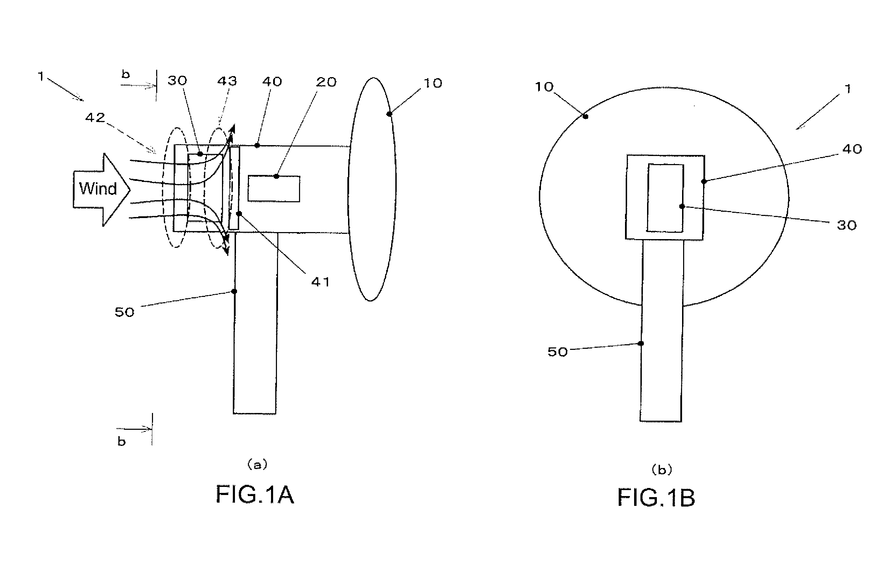

- FIGS. 1A and 1B: are schematic diagrams that illustrate construction of a first embodiment of a wind power generator to which the present invention is applied; wherein
- FIG. 1A: is a side view, and
- FIG. 1B: is a view as seen in the direction of the arrow of section b-b in FIG. 1A (this is the same in FIG. 3).
- FIG. 2: is a schematic perspective view of the nacelle in the wind power apparatus of this first embodiment, and is a view as seen from a diagonal on the upper right on the upwind side.
- FIGS. 3A and 3B: are schematic diagrams illustrating construction of a second embodiment of a wind power generator to which the present invention is applied.
- FIG. 4: is a schematic perspective view of the nacelle in the wind power apparatus of this second embodiment, and is a view as seen from a diagonal on the upper right on the upwind side.

### DETAILED DESCRIPTION OF THE INVENTION

The present invention, through the construction described below, provides a wind power generator that, while having simple construction, is capable of adequately cooling a transformer that is housed inside a nacelle. In this construction, in a downwind type wind power generator in which a rotor is located on the downwind side of the nacelle, the transformer is located on the upwind side of the nacelle, and together with the transformer being cooled by the air that is taken in from the upwind side of the nacelle, the air is discharged from an air outlet that is provided further on the upwind side than the partition between the transformer and the generator.

### Embodiment 1

In the following, a first embodiment of a wind power generator to which the present invention is applied is explained.

As illustrated in FIG. 1, a wind power generator 1 comprises a rotor 10, a generator 20, a transformer 30, a nacelle 40 and a tower 50 that is erected on a base. The wind power generator of this first embodiment is a so-called downwind type in which the rotor 10 is located on the downwind side of the nacelle 40 during normal operation.

The rotor 10 has a hub that is supported by the end section on the downwind side of the nacelle 40 such that it can rotate freely, and a plurality of blades that are attached in a radial shape to the hub.

The rotor 10 is rotated and driven by the dynamic lifting force that is generated when the blades receive an airflow.

The generator 20 is driven by the rotor 10 by way of a step-up mechanism (not illustrated in the figure), and generates electric power. The generator 20 is located in an area on the downwind side of the nacelle 40.

The generator 20 comprises a water-cooled type cooling unit (not illustrated in the figure) that circulates cooling water that has been cooled by a radiator (not illustrated in the figure). This cooling unit is also used for cooling peripheral equipment such as a control panel (not illustrated in the figure).

The transformer 30 is a transformer that raises the voltage of the output generated by the generator 20 and outputs the result as electric power.

The transformer 30 is located on the upwind side with respect to the generator 20.

The transformer 30 is coaled by air that enters the nacelle 40 as will be explained later.

The nacelle 40 is a section that houses the generator 20 and the transformer 20. The nacelle 40 comprises a partition 41, an air intake 42 and an air outlet 43.

The partition 41 is located near the center section of the nacelle 40, and divides the internal space of the nacelle 40 into an upwind side and downwind side.

The generator 20 is located further on the downwind side than the partition 41, and the transformer 30 is located further on the upwind side than the partition 41.

The air intake 42 is provided for introducing air (outside air) for cooling the transformer 30.

The air intake 42 is provided and opened up on the end section (front section as seen from the upwind side) on the upwind side of the nacelle 40.

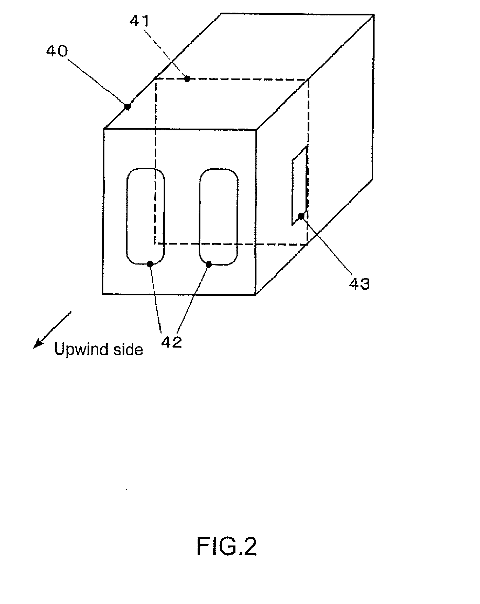

As an example, in FIG. 2, the air intake 42 is formed as two rectangular openings on the front section of the nacelle 40 having the long sides in the vertical direction, and the two openings are arranged in the horizontal direction. The position and shape is not limited to this.

The air outlet 43 is provided for discharging the air that was taken in from the air intake 42 to the outside of the nacelle 40 after the transformer 30 has been cooled.

The air outlet 43 is formed in at least one section of the top surface section bottom surface section and side surface section further on the upwind side than the partition 41.

As an example, in FIG. 2, the air outlet 43 is formed as a rectangular opening on the side surface section of the nacelle 40 on the upwind side of the partition 41 having the long side in the vertical direction. The position and shape are not limited to this.

The tower 50 is a post that supports the nacelle 40.

The top end section of the tower 50 is connected to the bottom section of the nacelle 40, and the bottom end section is fastened to a base section that is provided on the ground or above the ocean.

In this first embodiment, when an air flow (wind) from the left side in FIG. 1A blows against the nacelle 40, part of the outside air is introduced into the nacelle 40 from the air intake 42. The air that is taken in cools the transformer 30, after which the air is discharged to the outside of the nacelle 40 from the air outlet 43.

When this happens, there is a partition 41 provided inside the nacelle 40, so inside the nacelle 4, outside air is essentially prevented from entering the downwind side beyond the partition 41. In other words, the generator 20 and peripheral equipment are located outside of the air flow path from the air intake 42 past the transformer 30 to the air outlet 43.

With the first embodiment explained above, it is possible to obtain the following effects.
(1) By taking in outside air to air cool the transformer 30, and by cooling the generator by a water-cooling type cooling device, it is possible to cool the transformer 30 with a simple construction, and to prevent the generator 20 and peripheral equipment from becoming exposed to rain, snow, dust, salt and the like that enter in with the outside air.
(2) By providing a partition 41 inside the nacelle 40, it is possible to cool the transformer on the upwind side of the partition 41 while protecting the generator 20 and the like by the partition 41.
(3) In a downwind type wind generator 1, by providing an air intake 42 in the end section on the upwind side of the nacelle 40, outside air can be efficiently taken into the nacelle 40, and the transformer 30 can be adequately cooled.

### Embodiment 2

Next, a second embodiment of a wind power generator to which the present invention is applied will be explained.

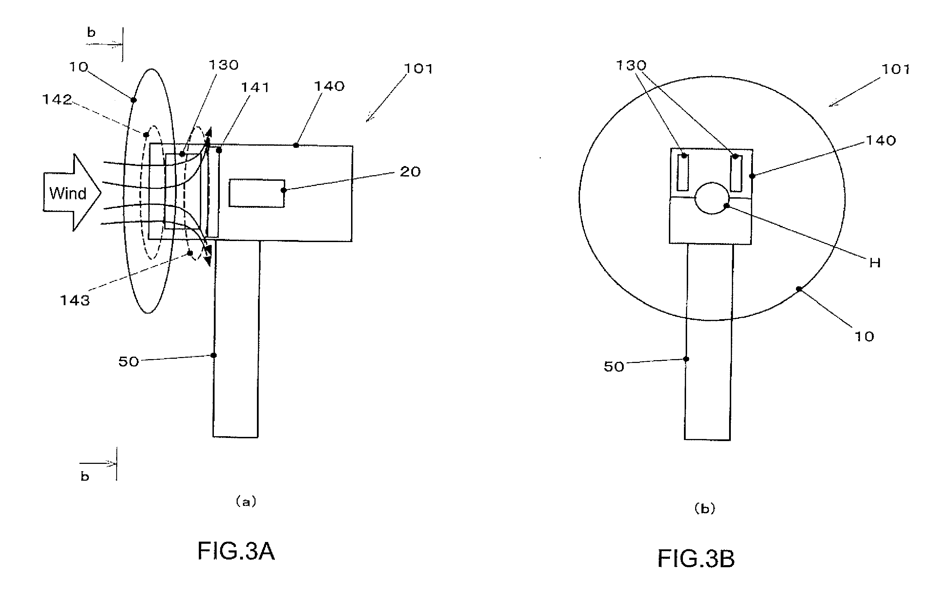

The same reference numbers will be used for parts that are essentially identical to those in the first embodiment described above, and any redundant explanation is omitted, so the explanation below will mainly concentrate on the differences. As illustrated in FIG. 3, the wind power generator 101 of this second embodiment is a so-called upwind type in which the rotor 10 is located on the upwind side of the nacelle 140 during normal operation.

The nacelle 140 comprises a partition 141, an air intake 142 and an air outlet 143.

The partition 141 is located near the center section of the nacelle 140, and divides the inside space of the nacelle 140 into an upwind side and a downwind side.

A generator 20 is located further on the downwind side than the partition 141.

The main shaft of the generator 20 is connected to a rotating shaft (not illustrated in the figure) that passes through the partition 141 and extends to the upwind side.

The transformer 130, as illustrated in FIG. 3A, is located further on the upward side than the partition 141. As illustrated in FIG. 3B, the transformer 30 is located such that it is away from the bearing housing H that houses the bearing that supports the rotating shaft above and the main shaft of the rotor 10. In other words, the transformer 130 is located such that it is apportioned on the left and right as seen from the upwind side.

The air intake 142 is provided for introducing air (outside air) for cooling the transformer 130 from the after flow of the rotor 10.

The air intake 142 is located such that it is opened up on the end section (front section as seen from the upwind side) of the nacelle 140.

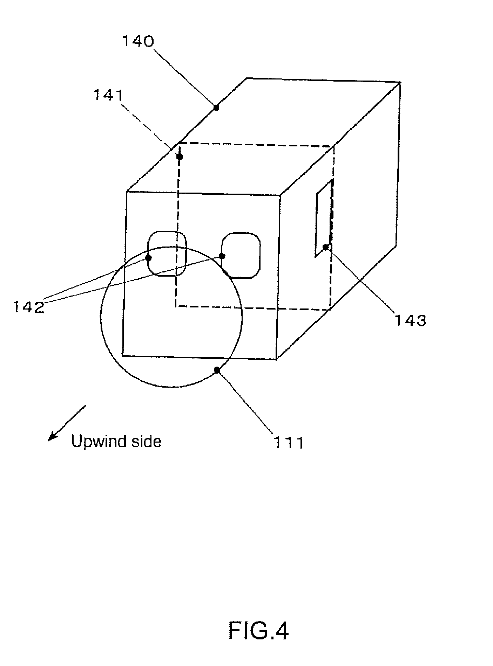

As an example, in FIG. 4, the air intake 142 is formed as two rectangular openings on the upper portion of the front surface of the nacelle 140, with the two openings being located on both sides in the horizontal direction away from the hub 111 of the rotor 10. The position and shape are not limited to this.

The air outlet 143 is provided for discharging air to the outside of the nacelle 140 after the air that has been taken in from the air intake 142 has cooled the transformer 130.

The air outlet is formed on at least one section of the top section, bottom section and side sections of the nacelle further on the upwind side than the partition 141.

As an example, in FIG. 4, the air outlet 143 is formed as a rectangular opening on the side section of the nacelle 140 on the upwind side of the partition 141, with the long side being in the vertical direction. The position and shape are not limited to this.

With this second embodiment explained above, it is essentially possible to obtain the same effect as the effect in the first embodiment above, even in an upwind type wind power generator 101 in which the rotor 10 is located on the upwind side of the nacelle 140.

### Variation

The present invention is not limited to the embodiments explained above, and can undergo various variations or changes, with those also being within the technical scope of the present invention.

For example, the construction of the wind power generator is not limited to the embodiments described above, and can be appropriately changed. For example, the location and number of air intake and air outlets, the shape and construction of the partition that divides the airflow path from the generator, can be appropriately changed.

It is to be understood that the above-described embodiments are illustrative of only a few of the many possible specific embodiments which can represent applications of the principles of the invention. Numerous and varied other arrangements can be readily devised by those skilled in the art without departing from the spirit and scope of the invention.

### LIST OF REFERENCE SIGNS

| | | |
|---|---|---|
| 1 | = | Wind power generator |
| 10 | = | Rotor |
| 20 | = | Generator |
| 30 | = | Transformer |
| 40 | = | Nacelle |
| 41 | = | Partition |
| 42 | = | Air intake |
| 43 | = | Air outlet |
| 50 | = | Tower |
| 101 | = | Wind power generator |
| 111 | = | Hub |

| | | |
|---|---|---|
| 130 | = | Transformer |
| 140 | = | Nacelle |
| 141 | = | Partition |
| 142 | = | Air intake |
| 143 | = | Air outlet |
| H | = | Bearing housing |

## Claims

1. A wind power generator (1), comprising:
- a power generator main body (40) having a space on the inside thereof;
- a wind turbine rotatably supported by the power generator main body (40);
- a power generator (20) provided on the inside of the power generator main body (40) and driven by a rotation of the wind turbine to generate electric power; and
- a transformer (30), provided on the inside of the power generator main body (40) and connected to the power generator (20), for transforming electric power generated by the power generator (20),
- wherein the power generator main body (40) has an air intake (42) for introducing air into the space, and an air outlet (43) for discharging the air that passed through the space to the outside; and
- wherein at least part of the transformer (30) is exposed to the space, and the power generator (20) is not exposed to the space.

2. The wind power generator according to claim 1,
further comprising:
- a tower (50), erected on a base, for supporting the power generator main body (40) rotatably in a horizontal direction,
- wherein the power generator main body (40) rotates in the horizontal direction according to a wind direction,
- wherein another space that is separated from the space by a partition (41) is provided inside the power generator main body (40), and the another space is arranged on a downwind side relative to the space, and
- wherein the power generator (20) is located inside the another space.

3. The wind power generator according to claim 1,
further comprising:
- a tower (50), erected on a base, for supporting the power generator main body (140) rotatably in a horizontal direction,
- wherein the power generator main body (140) rotates in the horizontal direction according to a wind direction,
- wherein the wind turbine is located on a downwind side relative to the power generator main body (140); and
- wherein the air intake (142) is located on an end portion on an upwind side of the power generator main body (140).

4. The wind power generator according to any of claims 1 to 3,
further comprising:
a cooling unit for cooling the power generator (20) by circulating cooling liquid in the generator (20).
